# EUROPEAN PATENT SPECIFICATION

(11) **EP 0 652 188 B1**
(45) Date of publication and mention of the grant of the patent: **06.08.1997**
(21) Application number: 94830533.9
(22) Date of filing: 10.11.1994
(51) Int. Cl.: C04B 28/14, C04B 40/00

(54) **Process for the production of a conglomerate of gypsum and impermeable granulated cellular material, and the conglomerate obtained thereby**
Verfahren zur Herstellung eines Konglomerats aus Gips und zellularen granuliertem undurchlässigem Material und das dabei erhaltene Konglomerat
Procédé pour la fabrication d'un conglomérat de gypse et d'un matériau imperméable et cellulaire en mousse et le conglomérat ainsi obtenu

(30) Priority: 10.11.1993 IT RM930742
(43) Date of publication of application: 10.05.1995
(73) Proprietor: Valentini, Luciana, I-01037 Ronciglione VT (IT)
(72) Inventor: Di Mattia, Giovanni, I-01037 Ronciglione VT (IT)
(74) Representative: Bazzichelli, Alfredo

(56) References cited:
- EP-A- 0 241 205
- DE-A- 1 471 224
- DE-A- 1 471 400
- DE-A- 2 716 918
- FR-A- 2 318 126
- GB-A- 1 015 331
- CHEMICAL ABSTRACTS, vol. 106, no. 18, 4 May 1987, Columbus, Ohio, US; abstract no. 143081v, K. ELLINGER ET AL. page 306 ;
- CHEMICAL ABSTRACTS, vol. 101, no. 4, 23 July 1984, Columbus, Ohio, US; abstract no. 27531q, SEKISUI HOUSE CO

## Description

The present invention relates to a process for the production of a conglomerate of gypsum and impermeable granulated cellular (foam) material with closed cells and to the conglomerate obtained thereby, which is particularly suitable to form dividing walls and internal walls in civil and industrial building constructions.

Gypsum panels of a wide variety of shapes and sizes are already known from the state of the art, made up of gypsum-based conglomerates and which, especially in recent times, have been widely used in civil and industrial building constructions to form dividing walls. Panels of this sort are known from the state of the art, made of solid gypsum, of gypsum with a polystyrene core (sunk in the panel), of gypsum made light with aerating agents, or of gypsum with the addition of perlite, vermiculite and/or expanded clay. However, there are numerous serious problems in the use of panels made of materials or conglomerates such as those indicated above.

As regards the panels made of solid gypsum, their main disadvantage is their great weight and the ease with which they absorb water. In houses or other structures under construction these elements are exposed to bad weather both before and during application, for example through open windows or through non-waterproofed roofing slabs, or are subject to contact with water poured onto the floor during work. Bearing in mind that the more water is absorbed the longer is the delay before subsequent operations can be carried out, it can easily be understood why attempts are made to obtain elements with low water absorption.

Another reason for the use of a minimum amount of water in excess of the stoichiometric amount (approximately 20% by weight) is connected to the need to give the product a remarkable strength.

It should be noted that during preparation of the gypsum/water mix it may be necessary or useful to use an amount of water in excess of the stoichiometric amount required to carry out the hemihydrate sulphate/bihydrate sulphate reaction, in order to improve the working/pouring characteristics of the semi-liquid mix. Clearly, the water in excess of the amount strictly necessary for complete hydration must be kept to a minimum according to working requirements, as an excess of water provokes an increase in the porosity of the finished product once this water (that is to say the water used to improve the working characteristics of the mixture) has evaporated. This provokes a consequent reduction in the mechanical strength of the product itself thereby decreasing its structural strength.

As regards to panels with hollow structure, the main problem consists in their greater fragility and rigidity with respect to products with a solid structure, and in the difficulties found in nailing into any point, which means that anchor inserts have to be used. In particular, when working panels drilled in corners, it is necessary to fill in the hollows in the panels before further working.

Finally, the panels made of conglomerates of gypsum and perlite or vermiculite (generally known as inert materials ) have the disadvantage that the inert material used absorbs water, especially in case of use in building constructions, so that the weight of the conglomerate can be compared to that of the full panel, thus cancelling out all the advantage of introducing lightening materials.

With the aim of uniting the advantages of the workability of full panels and those of noise absorbance, thermal insulation and low water absorption seen in products containing impermeable cellular materials, products have been manufactured in which a sheet of foam polystyrene is sunk in the gypsum. However, the product obtained is extremely fragile and splits easily, causing formation of two sheets of gypsum separated from the sheet of foam polystyrene. Furthermore, in case of cutting to measure of the panel, the foam polystyrene sheet becomes visible, and it must be dug out and filled in with mortar before proceeding with further working.

The use of impermeable cellular materials in the conglomerate mentioned above in order to decrease absorption, even occasional, of water has been limited to the use of sheets of said materials. No mention is made in the state of the art of products in which the impermeable cellular material is used in granular form. The hydrophobic nature of foam polystyrene (mainly used as a cellular material), by preventing the intimate mixing of the granules forming it with the water used to produce the gypsum did not, for physical reasons, allow the manufacture of conglomerates in which the polystyrene in granular form was uniformly distributed. This is due to the fact that, because of its lower specific weight with respect to the mix, the foam polystyrene granules used tend to float on the surface of the water during mixing, and to gather at the top of the mold when the mix is poured out to form conglomerates.

There is no mention in the state of the art of the use of impermeable cellular materials other than polystyrene.

An object of the present invention was therefore to obtain conglomerates of gypsum and impermeable granulated cellular material that, as well as giving the working characteristics of solid gypsum panels, also have low water absorption and high levels of lightness and acoustic insulation thanks to a uniform distribution of the cellular material within the gypsum, and that furthermore could be manufactured using a minimum amount of water in excess of that required for crystallization, in order to give the finished product high mechanical strength.

It has now been surprisingly found that it is possible to obtain conglomerates made of gypsum and granulated impermeable cellular material, particularly polystyrene, in which the granulated foam material is distributed in a substantially homogeneous manner, by means of a process in which a mixture of gypsum, cellular material and water is poured into molds for formation of panels of the desired size and shape when said mixture has reached a viscosity such as to severely restrict the mobility of the granules of cellular material, the amount of water present in said mixture being only slightly in excess of the stoichiometric amount.

Subject matter of the present invention is therefore a process for the production of a gypsum and impermeable cellular closed cell granulated material, characterized in that it comprises the following operations:
a) preparation of a mix of powdered gypsum and cellular material containing a volume of 0.4 - 0.6 liters of cellular material to each liter of gypsum, and dry mixing of said mix;
b) rapid pouring of said mix into a mixing bath provided with stirring means, said mixing bath containing an amount of water of between 30 and 34% by weight with respect to the amount of gypsum in the mix;
c) stirring of the mix for a period of 15 - 30 seconds until it reaches a viscosity not exceeding 200 centistokes;
d) pouring of the mix obtained into molds of the required shapes and sizes and resting therein for a length of time sufficient to enable said mixture to solidify;
e) partial extraction of the conglomerate thus obtained from the molds to complete setting of the gypsum; and
f) complete extraction and drying and finishing operations.

The present invention relates also to the conglomerates obtained according to the process described.

### Brief description of the drawings

With the present description are enclosed two sheets of drawings, in which:
figure 1 shows a block diagram of the process according to the present invention;
figure 2 shows a perspective view of a preferred mixing bath used in the process according to the present invention;
figure 3 shows a cross-section of said bath.

In the present invention the term granulated foam material is to be intended to mean an impermeable foam material in granules of a substantially cubic, parallelepiped, cylindrical, spherical or irregular form having dimensions (side or average diameter) of around 2 - 5 mm. Particularly preferred is a cellular material in granules of a spherical shape (beads) with a diameter of 2 - 3 mm. Suitable materials are foam polystyrene and equivalent materials.

In the present invention it is preferred to use a gypsum having the following composition:

| | |
|---|---|
| calcium sulphate | 95% |
| calcium carbonate | 2% |
| and siliceous and quartziferous sand | 3%. |

A viscosity below a threshold level sufficient to allow minimum mobility of the granulated foam material within the water/gypsum mix (preferably 200 centistokes) is reached in an extremely short time by using mixing machines at high running provided with stirrers. Mixing at high running allows use of an amount of water only slightly in excess of the stoichiometric amount required for the reaction to form bihydrate gypsum. This is done by reducing the reaction time between gypsum and water, which is the time required for solidification of the conglomerate (setting of gypsum). To change in a stoichiometrical amount the powdered gypsum (hemihydrate) into solid gypsum (bihydrate) an amount of 20% water by weight of gypsum is necessary. Mixing in the mixing machine at high running allows minimization of the amount of workability water in excess of this value (between 50 and 70% by weight) and thus allows considerable reduction in the amount of water that does not participate in the reaction forming the gypsum, but has a purely mechanical function. In this sense it should be remembered that the gypsum can be mixed with up to 120% by weight water. As mentioned above, a minimum excess of water, as well as shortening the time necessary between production of the conglomerate and working and finishing the panel, above all makes it possible to obtain conglomerates with high mechanical strength.

It has also been found, and likewise forms subject matter of the present invention, the fact that more homogeneous conglomerates are formed, (that is to say conglomerates in which the balls of polystyrene are more homogeneously distributed through the gypsum), if in the process according to the present invention mixing baths are used that are provided with side tipping mechanisms to pour the mixture when it has reached a certain viscosity.

It has, in fact, been surprisingly found that in the bath, under the thrust from the stirrers, in particular spiral mixers, and due to the effect of the motion created, the balls tend to sink in the mixture. At the end of the mixing, due to a hydrostatic effect, these balls tend to rise again. Consequently discharge from the side of the mixing bath first pours into the formworks or molds the part of the gypsum/ball mix with the highest percentage by volume of polystyrene balls, which goes to the bottom of the formworks or molds; this will be followed by a part of the mix with a lower percentage by volume of balls. As the gypsum is close to setting, partial rising of the balls in the formwork or mold means that at the moment the gypsum sets there is a distribution in which the balls are distributed through the gypsum matrix, now solid, in a more uniform manner.

In a further embodiment of the process according to the present invention an amount of fiber of up to 10% by weight with reference to the weight of the conglomerate is added to the conglomerate during the mixing step, which substantially allows an increase in the strength of the conglomerate; among these fibers can be mentioned glass fibers, or synthetic fibers such as polyesters.

In a future embodiment of the process according to the present invention an amount of cement of up to 1% by weight with reference to the weight of the conglomerate is added to the conglomerate during the mixing step.

This provokes an increase of strength and a decrease of fragility of the finished product and diminishes the water absorption of the gypsum matrix.

The process according to the present invention will now be described in greater detail with reference to the enclosed drawings.

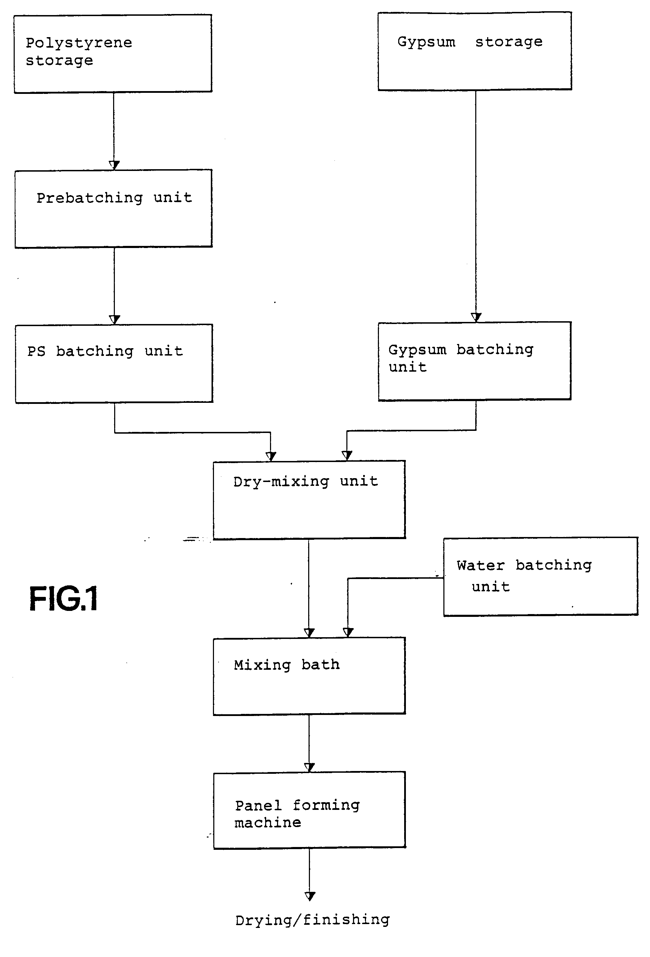

With reference to figure 1, the desired proportions by weight of gypsum and polystyrene flow into the dry mixing unit from respective hoppers, through respective batching units. For practical reasons it is preferred to use a pre-batching unit between the polystyrene hopper and the batching unit for the polystyrene itself.

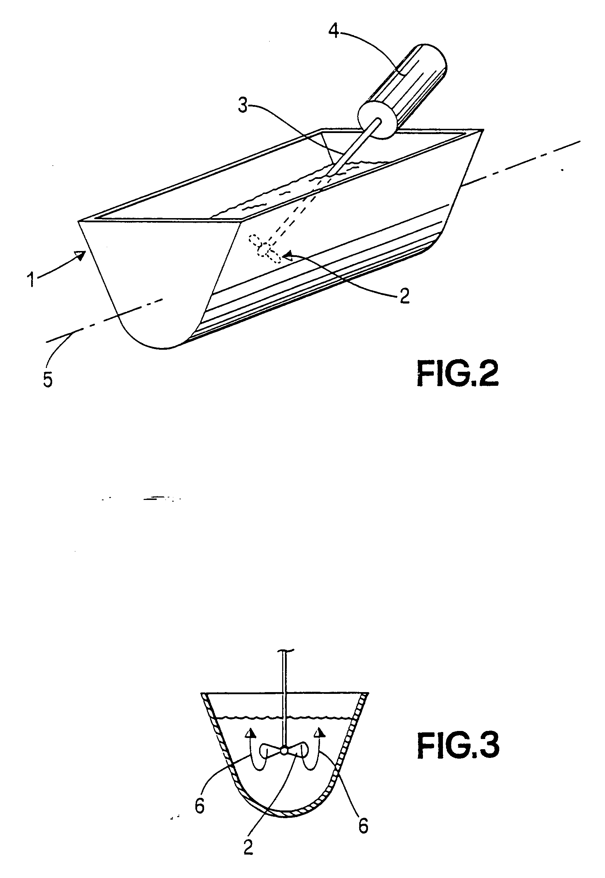

As a dry mixing unit it is preferred to use an Archimedean screw, connected to the mixing bath. The mixing bath 1 (as can be seen more clearly from figure 2) is provided with screw mixers 2 (only one of which is illustrated for the sake of simplicity) activated by a motor 4 by means of a transmission shaft 3. As shown in figure 2, the motion created inside the mixing bath 1 (indicated by the arrows 6 showing the direction of the threads) caused by the action of the screw mixers 2 allows mixing to take place with a minimum excess of water as there is a more intimate contact between the water and the gypsum which traps the polystyrene beads.

The tipping action around the axis 5 of the bath 1 (using means not illustrated in the drawing) allows, for the reasons explained above, greater homogeneity to be obtained in the finished product.

The necessary amount of water is added to the mixing bath before addition of the gypsum/polystyrene mixture through a water batching unit. Following this, the mixture is poured into molds and then further worked, as will be more clearly specified in example 1. After pouring, the addition of more water to the mixing bath (which is returned to a vertical position) washes the bath out and prepares the plant for the next cycle.

In the following a non-limiting example of production of a conglomerate according to the present invention and a table giving the physical properties of a sheet of conglomerate are listed.

### Example

230 liters of powdered white gypsum from a storage silos (gypsum storage) are poured into a mixing silos (dry mixing unit) along with 120 liters of expanded polystyrene in beads with an average diameter of 2.3 mm, volumetrically batched using a batching unit and taken from a pre-batching unit which is in turn connected to a polystyrene storage. Mixture of the two loads is performed using an Archimedean screw. The dry mixture is then rapidly poured into a mixing bath containing 160 liters of water. The bath is provided with screw mixers which rotate at a speed of 1200 revolutions per minute. Mixing is performed for a period of 20-25 seconds.

The amount of water used has been chosen in such a way as to be the minimum required to work the gypsum, to give maximum compactness of the gypsum matrix in the shortest possible time, with consequent maximum mechanical strength and rapidity of finishing. When a viscosity not exceeding 200 centistokes has been reached in the mixing bath, the mix obtained is thick, but can still be poured, and at this point it is poured into the molds, which are made of chromium-plated steel. In a preferred embodiment the steel molds have almost parallel inner walls with a dihedral with an opening sufficient to allow removal from the mold without problems.

The standing time in the molds is approximately 20 - 30 seconds. After this the conglomerates, almost completely formed, are extracted to approximately half their height, to complete the setting reaction, waiting for a further 20 - 60 seconds. They are then picked up at the top using gripper devices known to the state of the art.

Extraction of the partially set conglomerates from the molds for completion of the setting reaction and final extraction are carried out using a linear actuator, preferably made up of a jack acting on extractors situated inside the molds. The extractors, of a shape substantially corresponding to the inner cross-section of the molds, can with advantage be provided with gaskets on the contact edge between the mold and the extractor.

### Table

The following table gives the physical properties of interest to the field of building construction, for a sheet of conglomerate obtained according to the process of the present invention, with a size of 1 m x 1 m and a thickness of 72 mm.

| | |
|---|---|
| Specific weight | 730 kg/m³ |
| Fire-proofing class on a sheet 75 mm thick | Class REI 120 |
| Thermal conductivity λ = | 0.19 W/mhC° |
| Acoustic insulation on a sheet 75 mm thick | 36 dB |

## Claims

1. A process for the production of a conglomerate of gypsum and cellular closed-cell impermeable granulated material, characterized in that it comprises the following operations:
a) preparation of a mixture of powdered gypsum and cellular material containing a volume of 0.4 - 0.6 liters of cellular material to each liter of gypsum, and dry mixing of said mixture;
b) rapid pouring of said mixture into a mixing bath provided with stirring means, said mixing bath containing an amount of water of between 30 and 34% by weight with respect to the amount of gypsum in the mixture;
c) mixing of the mix until it reaches a viscosity not exceeding 200 centistokes;
d) pouring of the mix obtained following operation c) into molds of the required shapes and sizes and resting therein for a length of time sufficient to enable said mixture to solidify;
e) partial extraction of the conglomerate thus obtained from the molds to complete setting of the gypsum;
f) complete extraction and drying and finishing operations.

2. The process according to claim 1, characterized in that said cellular closed-cell impermeable granulated material is polystyrene and the gypsum used has the following percentage composition by weight: calcium sulphate 95%, calcium carbonate 2%, siliceous and quartziferous sand 3%.

3. The process according to claims 1 or 2, characterized in that said mixing in stage c) is carried out for a period of time of between 15 and 30 seconds.

4. The process according to any one of the preceding claims, characterized in that said mixing bath is provided with side tipping means for pouring the mix.

5. The process according to any one of the preceding claims, characterized in that during operation b) fibrous material is introduced into the mix of gypsum, cellular material and water.

6. The process according to any one of the claims 1 to 4 characterized in that during operation b) cement is introduced into the mix of gypsum, cellular material and water.

7. Conglomerate obtainable according to the process illustrated in claims 1 to 6.

## Patentansprüche

1. Verfahren zur Herstellung eines Konglomerats aus Gips und einem zellulären geschlossenzelligen undurchlässigen granulierten Material, **dadurch gekennzeichnet**, daß es die folgenden Schritte umfaßt:
a) Herstellen eines Gemisches aus pulverförmigem Gips und zellulärem Material, enthaltend ein Volumen von 0,4 - 0,6 Litern zelluläres Material pro Liter Gips, und trockenes Vermischen des Gemisches;
b) rasches Gießen des Gemisches in ein Mischbad, das mit Mitteln zum Rühren versehen ist, wobei das Mischbad eine Wassermenge zwischen 30 und 34 Gew.-%, bezogen auf die Gipsmenge in dem Gemisch, enthält;
c) Vermischen der Mischung bis sie eine Viskosität nicht über 200 Centistokes erreicht;
d) Gießen der erhaltenen Mischung im Anschluß an Schritt c) in Gießformen mit der geforderten Form und Größe und Ruhenlassen in diesen Gießformen wahrend eines Zeitraums, der ausreicht, um das Gemisch verfestigen zu lassen;
e) teilweises Herausnehmen des so erhaltenen Konglomerats aus den Gleßformen, um das Aushärten des Gipses zu vervollständigen;
f) vollständiges Herausnehmen und Trocknen und Fertigbearheiten.

2. Verfahren nach Anspruch 1, **dadurch gekennzeichnet**, daß das zelluläre geschlossenzellige undurchlässige granulierte Material Polystyrol ist und der verwendete Gips die folgende prozentuale Zusammensetzung, bezogen auf das Gewicht, aufweist: Calciumsulfat 95%, Calciumcarbonat 2%, siliciumdioxidhaltiger und quarzhaltiger Sand 3%.

3. Verfahren nach den Ansprüchen 1 oder 2, **dadurch gekennzeichnet**, daß das Vermischen in Stufe c) während eines Zeitraums zwischen 15 und 30 Sekunden durchgeführt wird.

4. Verfahren nach einem der vorhergehenden Ansprüche, **dadurch gekennzeichnet**, daß das Mischbad mit Mitteln zum seitlichen Kippen versehen ist, um die Mischung auszugießen.

5. Verfahren nach einem der vorhergehenden Ansprüche, **dadurch gekennzeichnet**, daß während des Schritts b) Fasermaterial in die Mischung aus Gips, zellulärem Material und Wasser eingebracht wird.

6. Verfahren nach einem der Ansprüche 1 bis 4, **dadurch gekennzeichnet**, daß während des Schritts b) Zement in die Mischung aus Gips, zellulärem Material und Wasser eingebracht wird.

7. Konglomerat, erhältlich nach dem Verfahren, das in den Ansprüchen 1 bis 6 erläutert ist.

## Revendications

1. Procédé de production d'un aggloméré de gypse et de matériau granulé imperméable cellulaire à cellules fermées caractérisé par le fait qu'il comprend les opérations suivantes consistant à:
a)préparer un mélange de gypse pulvérulent et de matériau cellulaire contenant un volume de 0,4 - 0,6 litre de matériau cellulaire par litre de gypse, et mélanger à sec ledit mélange ;
b)verser rapidement ledit mélange dans un bain de mélange doté de moyens d'agitation, ledit bain de mélange contenant une quantité d'eau comprise entre 30 et 34% en poids par rapport à la quantité de gypse dans le mélange,
c)mélanger le mélange obtenu jusqu'à ce qu'il atteigne une viscosité n'excédant pas 200 centistokes ;
d)couler le mélange obtenu suite à l'opération c) dans des moules ayant les formes et dimensions requises et le laisser à l'intérieur pendant une durée suffisante pour permettre audit mélange de se solidifier ;
e)extraire partiellement l'aggloméré ainsi obtenu à partir des moules pour achever la prise du gypse ;
f)achever l'extraction et procéder aux opérations de séchage et de finissage.

2. Procédé selon la revendication 1, caractérisé par le fait que ledit matériau granulé imperméable cellulaire à cellules fermées est du polystyrène et que le gypse utilisé présente la composition suivante en pourcentage en poids: sulfate de calcium 95%, carbonate de calcium 2%, sable siliceux et quartzifère 3%.

3. Procédé selon les revendications 1 ou 2, caractérisé par le fait que ladite opération de mélange de l'étape c) est conduite pendant une durée comprise entre 15 et 30 secondes.

4. Procédé selon l'une quelconque des revendications précédentes, caractérisé par le fait que ledit bain de mélange est doté de moyens de déversement latéral pour couler le mélange.

5. Procédé selon l'une quelconque des revendications précédentes, caractérisé par le fait que pendant l'opération b) un matériau fibreux est introduit dans le mélange de gypse, de matériau cellulaire et d'eau.

6. Procédé selon l'une quelconque des revendications 1 à 4, caractérisé par le fait que pendant l'opération b) du ciment est introduit dans le mélange de gypse, de matériau cellulaire et d'eau.

7. Aggloméré pouvant être obtenu selon le procédé décrit dans les revendications 1 à 6.
